# EUROPEAN PATENT SPECIFICATION

(11) **EP 3 482 863 B1**
(45) Date of publication and mention of the grant of the patent: **22.07.2020**
(21) Application number: 18203312.6
(22) Date of filing: 30.10.2018
(51) Int. Cl.: B23K 9/073, B23K 9/09

(54) **WELDING POWER SOURCE APPARATUS**
SCHWEISSSTROMQUELLE
SOURCE D'ALIMENTATION POUR LE SOUDAGE

(30) Priority: 09.11.2017 JP 2017216302
(43) Date of publication of application: 15.05.2019
(73) Proprietor: Daihen Corporation, Osaka 532-8512 (JP)
(72) Inventor: MIYAJIMA, Yuichi, Osaka-shi, Osaka 532-8512 (JP)
(74) Representative: Boult Wade Tennant LLP

(56) References cited:
- JP-A- H 026 067
- US-A1- 2014 203 006

## Description

### FIELD

The present disclosure relates to a welding power source apparatus for alternating current (AC) arc welding.

### BACKGROUND

In AC arc welding, arc interruption tends to occur when the output polarity switches. In particular, arc interruption tends to occur when switching from a positive polarity at which the potential on the workpiece side is higher than the potential on the welding torch side to an opposite polarity at which the potential on the workpiece side is lower than the potential on the welding torch side. In order to suppress arc interruption, a welding power source apparatus that applies a high voltage when switching from a positive polarity to the opposite polarity is known. The high voltage is for improving restrikability at the time of switching polarity, and, hereinafter, is denoted as the "restriking voltage". An example of such a welding power source apparatus is disclosed in JP-A-2017-24061.

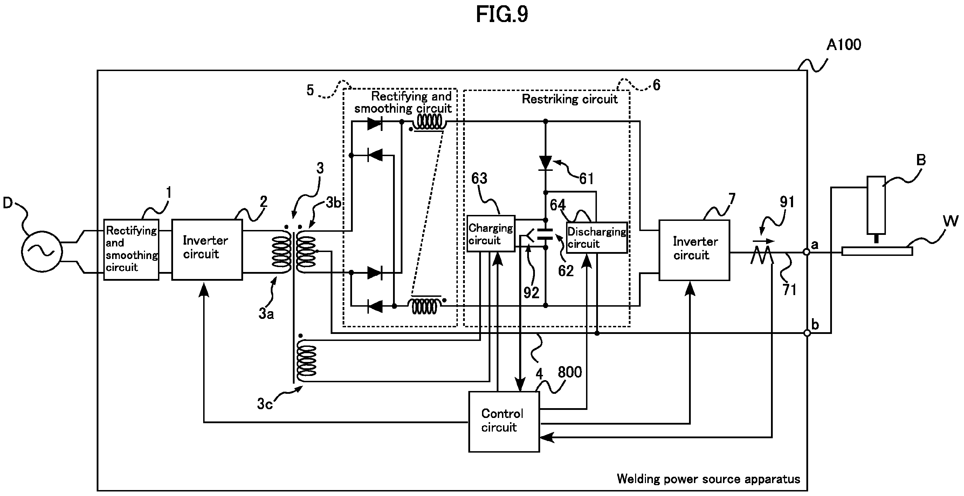

Fig. 9 is a block diagram showing an example of a welding power source apparatus for AC welding, and shows the overall configuration of a welding system. The welding system shown in Fig. 9 is provided with a welding torch B and a welding power source apparatus A100 that supplies power to the welding torch B. The welding power source apparatus A100 converts AC power that is input from a commercial power source D into direct current (DC) power with a rectifying and smoothing circuit 1, and converts the DC power into high frequency power with an inverter circuit 2. The welding power source apparatus A100 then transforms the high frequency power with a transformer 3, converts the transformed high frequency power into DC power with a rectifying and smoothing circuit 5, and converts the DC power into AC power and outputs the AC power with an inverter circuit 7. A restriking circuit 6 applies a restriking voltage, when the output polarity of the welding power source apparatus A100 switches. The restriking circuit 6 supplies some of the high frequency power that is output by the inverter circuit 2 from an auxiliary winding 3c of the transformer 3, and charges a restriking capacitor 62 using a charging circuit 63. The power charged in the restriking capacitor 62 is then discharged by a discharging circuit 64.

A control circuit 800 controls switching of the inverter circuit 2, in order to perform feedback control such that the output current of the welding power source apparatus A100 detected by the current sensor 91 attains a target current. Also, the control circuit 800 controls switching of the inverter circuit 7, in order to switch the output polarity of the welding power source apparatus A100. Furthermore, the control circuit 800 controls the timing of charging and discharging of the restriking voltage, by controlling the charging circuit 63 and the discharging circuit 64. In the welding power source apparatus A100, the restriking voltage is applied when the output polarity of the welding power source apparatus A100 switches, and the occurrence of arc interruption is thus suppressed.

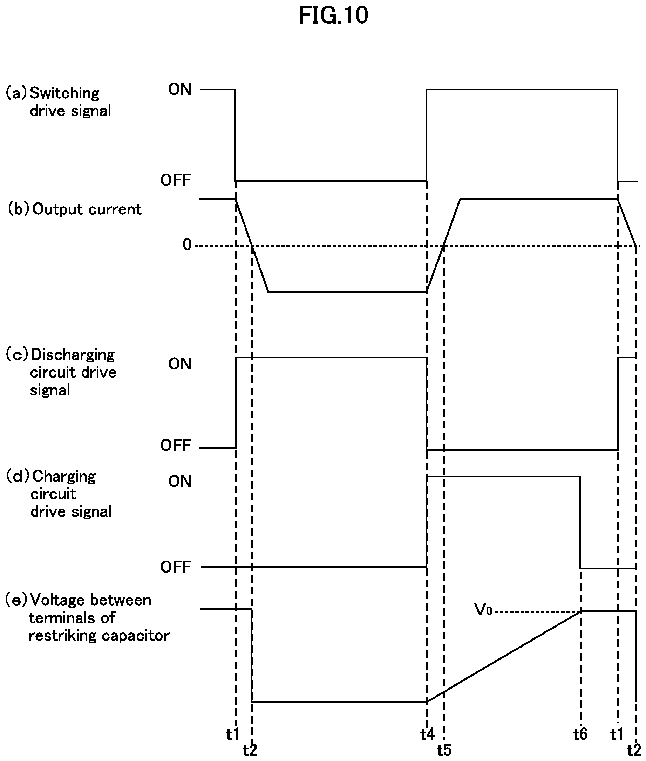

Fig. 10 is a timing chart for describing control of the restriking circuit 6 that is performed by the control circuit 800, and shows waveforms of various signals of the welding power source apparatus A100. In Fig. 10, (a) shows a switching drive signal that is for switching the output polarity of the inverter circuit 7. In Fig. 10, (b) shows the output current of the welding power source apparatus A100 that is detected by a current sensor 91. The current sensor 91 takes the case where current flows toward an output terminal a from the inverter circuit 7 as positive, and takes the case where current flows toward the inverter circuit 7 from the output terminal a as negative. In Fig. 10, (c) shows a discharging circuit drive signal that is for driving the discharging circuit 64, (d) shows a charging circuit drive signal that is for driving the charging circuit 63, and (e) shows the voltage between the terminals of the restriking capacitor 62.

The discharging circuit drive signal changes to ON when the switching drive signal switches from ON to OFF at time t1, and maintains the ON state until the switching drive signal switches from OFF to ON at time t4 (refer to (c) in Fig. 10). During this time, the restriking voltage is dischargeable. The output current decreases from when the switching drive signal switches from ON to OFF at time t1 (refer to (b) of Fig. 10), and a restriking current flows when the direction of the output current changes at time t2, causing the voltage between the terminals of the restriking capacitor 62 to decrease rapidly (refer to (e) of Fig. 10).

The charging circuit drive signal changes to ON when the switching drive signal switches to ON at time t4 (refer to (d) of Fig. 10), and charging of the restriking voltage is started. The voltage between the terminals of the restriking capacitor 62 thereby gradually increases (refer to (e) of Fig. 10). The charging circuit drive signal then changes to OFF when the voltage between the terminals of the restriking capacitor 62 attains a target voltage V₀ at time t6 (refer to (d) of Fig. 10). Charging of the restriking voltage is thereby ended.

Charging of the restriking voltage needs to be completed by the time of the next discharge. When discharged before charging is completed, the restriking voltage that is applied will be insufficient to enable restriking, and arc interruption may occur. As shown in Fig. 9, some of the output power of the inverter circuit 2 is supplied to the charging circuit 63. The output of the inverter circuit 2 is adjusted, in order to perform feedback control of the output current of the welding power source apparatus A100. In the case where the target current is small (e.g., 5 A), the output power of the inverter circuit 2 decreases, and the power that is supplied to the charging circuit 63 also decreases. This results in the charging speed of the restriking voltage slowing, and it may not be possible to complete charging by the time of the next discharge.

US 2014/203006 A1 discloses systems and methods providing current regulation for AC arc welding processes to regulate arc welding performance.

JP H02 6067 A discloses a capacitor type power supply device for welding by directly connecting capacitors to the output terminal of a rectifier circuit and, at the same time, providing a charging control circuit which charges the capacitors by supplying constant currents during most of a charging period.

### SUMMARY

The present disclosure is presented under the above circumstances, and has an object to provide a welding power source apparatus that is able to suppress instances where charging is not completed by the time of the next discharge.

The present invention provides a welding power source apparatus according to claim 1.

According to this configuration, the control circuit starts charging of the restriking voltage at the time of the opposite polarity, and ends charging of the restriking voltage after switching to the positive polarity. Accordingly, charging of the restriking voltage is performed over a time span from the period of opposite polarity to the period of positive polarity. Because the time period that charging is performed can be lengthened in comparison to the case where charging is only performed in the period of positive polarity, instances where charging is not completed by the time of the next discharge can be suppressed, even in the case where the charging speed of the restriking voltage slows.

The control circuit starts charging when a predetermined time period elapses after switching from the positive polarity to the opposite polarity. According to this configuration, the charging circuit is able to start charging at a timing that is after restriking of the arc is completed and during the period of opposite polarity.

In a preferred embodiment, the predetermined time period may be a time period less than or equal to half of a period of the opposite polarity. According to this configuration, the time period that charging is performed can be sufficiently lengthened.

In a preferred embodiment, the welding power source apparatus may further include a current sensor configured to detect an output current that flows from the inverter circuit to the workpiece, taking a flow direction from the inverter circuit to the workpiece as a positive flow direction, and the control circuit may cause the charging circuit to start charging when the output current becomes less than or equal to a negative predetermined current. According to this configuration, the charging circuit is able to start charging at a timing that is after restriking of the arc is completed and during the period of opposite polarity.

In a preferred embodiment, the welding power source apparatus may further include a voltage sensor configured to detect a voltage between terminals of the restriking capacitor, and the control circuit may interrupt charging when the voltage between the terminals detected by the voltage sensor attains a predetermined voltage after causing the charging circuit to start charging, and cause the charging circuit to resume charging after switching from the opposite polarity to the positive polarity. According to this configuration, the voltage between the terminals when switching from the opposite polarity to the positive polarity can be suppressed to a predetermined voltage.

In a preferred embodiment, the control circuit may cause the charging circuit to resume charging, when a second predetermined time period elapses after switching from the opposite polarity to the positive polarity. According to this configuration, the charging circuit is able to resume charging, after restriking of the arc is completed.

In a preferred embodiment, the welding power source apparatus may include a current sensor configured to detect an output current that flows from the inverter circuit to the workpiece, taking a flow direction from the inverter circuit to the workpiece as a positive flow direction, and the control circuit may cause the charging circuit to resume charging when the output current becomes greater than or equal to a positive second predetermined current. According to this configuration, the charging circuit is able to resume charging, after restriking of the arc is completed.

In a preferred embodiment, the welding torch is a non-consumable electrode welding torch, and the inverter circuit includes a half-bridge circuit.

According to the present disclosure, the control circuit starts charging of the restriking voltage at the time of the opposite polarity, and ends charging of the restriking voltage after switching to the positive polarity. Accordingly, charging of the restriking voltage is performed over a time span from the period of opposite polarity to the period of positive polarity. Because the time period that charging is performed can be lengthened in comparison to the case where charging is only performed the period of positive polarity, instances where charging is not completed by the time of the next discharge can be suppressed, even in the case where the charging speed of the restriking voltage slows.

### BRIEF DESCRIPTION OF THE DRAWINGS

Fig. 1 is a block diagram showing a welding power source apparatus according to a first embodiment.
Figs. 2A and 2B are diagrams showing a charging circuit and a discharging circuit according to the first embodiment.
Fig. 3 is a timing chart for describing control of a restriking circuit, and shows waveforms of various signals of the welding power source apparatus.
Fig. 4 is a block diagram showing a welding power source apparatus according to a second embodiment.
Fig. 5 is a timing chart for describing control of a restriking circuit, and shows waveforms of various signals of the welding power source apparatus shown in Fig. 4.
Fig. 6 is a block diagram showing a welding power source apparatus according to a third embodiment.
Fig. 7 is a timing chart for describing control of a restriking circuit, and shows waveforms of various signals of the welding power source apparatus shown in Fig. 6.
Fig. 8 is a block diagram showing a welding power source apparatus according to a fourth embodiment.
Fig. 9 is a block diagram showing an example of a welding power source apparatus.
Fig. 10 is a timing chart for describing control of a restriking circuit, and shows waveforms of various signals of the welding power source apparatus shown in Fig. 9.

### DESCRIPTION OF EMBODIMENTS

Hereinafter, preferred embodiments of the present disclosure will be described in detail with reference to the accompanying drawings.

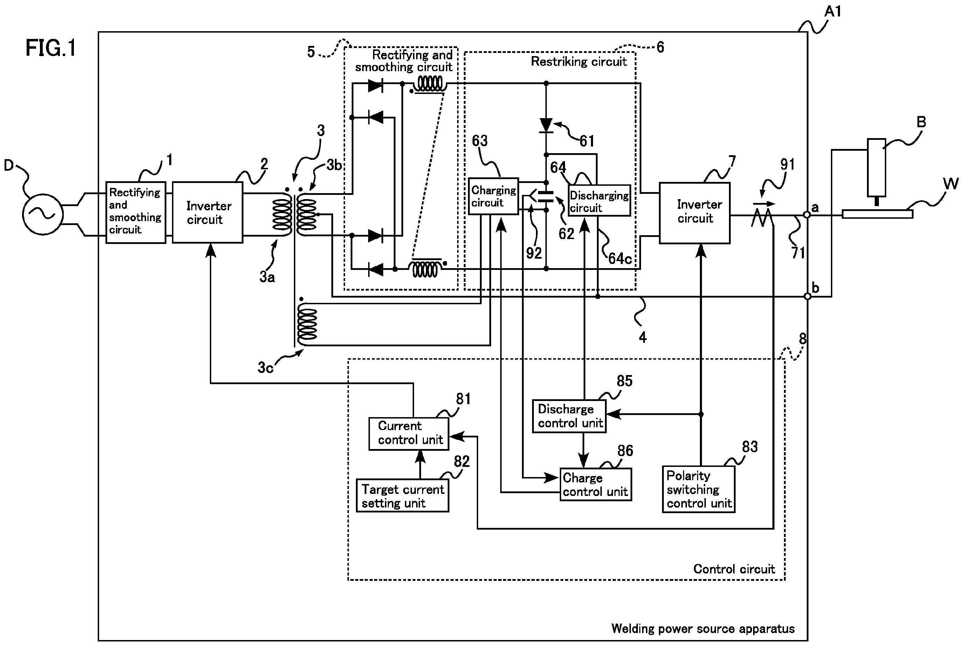

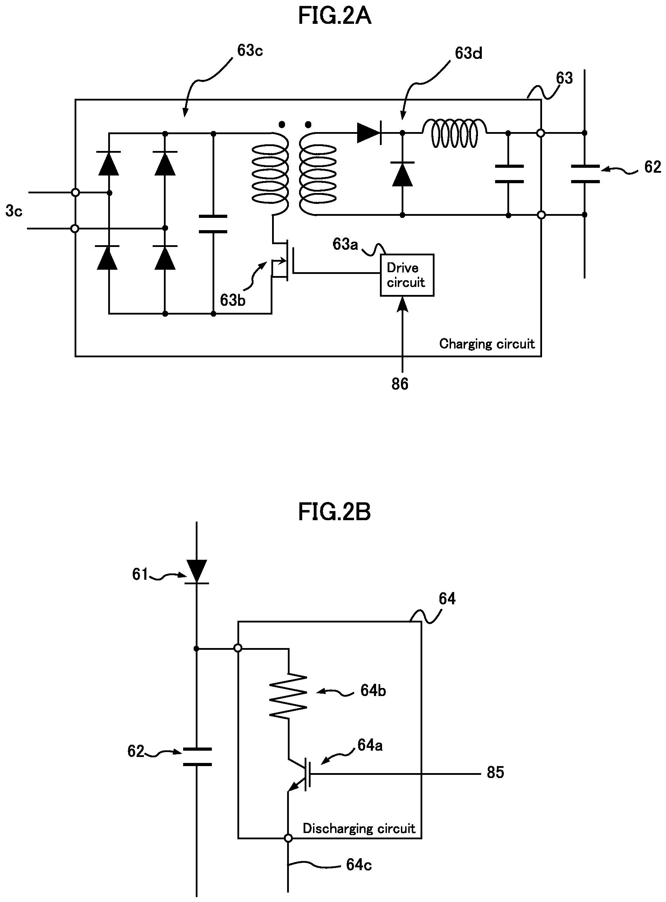

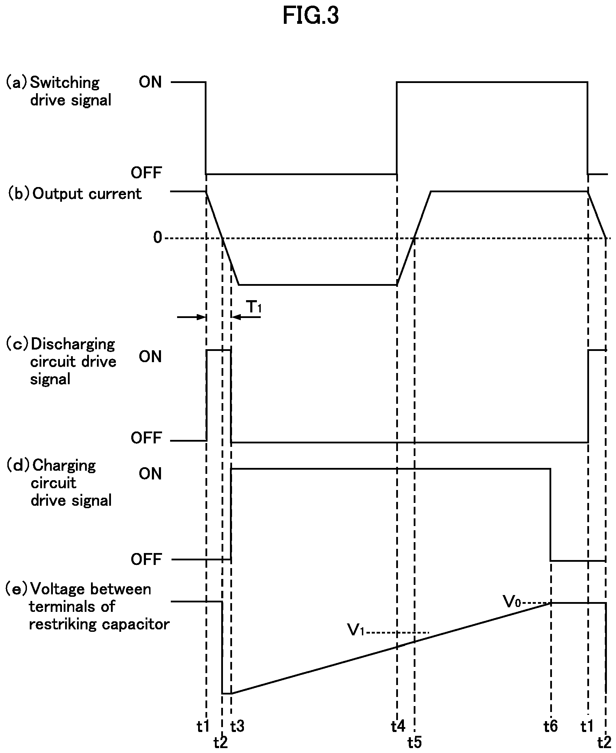

Figs. 1 to 3 are for describing a welding power source apparatus according to a first embodiment. Fig. 1 is a block diagram showing a welding power source apparatus A1, and shows the overall configuration of a welding system. Fig. 2A is a circuit diagram showing an example of a charging circuit 63 of the welding power source apparatus A1. Fig. 2B is a circuit diagram showing an example of a discharging circuit 64 of the welding power source apparatus A1. Fig. 3 is a timing chart for describing control of a restriking circuit 6, and shows waveforms of various signals of the welding power source apparatus A1.

As shown in Fig. 1, the welding system is provided with the welding power source apparatus A1 and a welding torch B. The welding system is an AC TIG welding system in which the welding torch B is a non-consumable electrode torch. The welding power source apparatus A1 converts AC power that is input from a commercial power source D, and outputs the resultant power from output terminals a and b. The output terminal a is connected to a workpiece W by a cable. The output terminal b is connected to an electrode of the welding torch B by a cable. The welding power source apparatus A1 generates an arc between the tip of the electrode of the welding torch B and the workpiece W, and supplies power. Welding is performed using the heat of the arc. A combination of the welding torch B, the workpiece W and the generated arc constitutes the load of the welding power source apparatus A1, and is thus denoted as the "welding load" in the case of indicating the combined load.

The welding power source apparatus A1 is provided with a rectifying and smoothing circuit 1, an inverter circuit 2, a transformer 3, a rectifying and smoothing circuit 5, the restriking circuit 6, an inverter circuit 7, a control circuit 8, a current sensor 91 and a voltage sensor 92.

The rectifying and smoothing circuit 1 converts the AC power that is input from the commercial power source D into DC power, and outputs the DC power. The rectifying and smoothing circuit 1 is provided with a rectifying circuit that rectifies AC current, and a smoothing capacitor that performs smoothing. Note that the configuration of the rectifying and smoothing circuit 1 is not limited.

The inverter circuit 2 is, for example, a single-phase full-bridge PWM control inverter, and is provided with four switching elements. The inverter circuit 2 converts the DC power that is input from the rectifying and smoothing circuit 1 into high frequency power, by switching the switching elements using an output control drive signal that is input from the control circuit 8, and outputs the high frequency power. Note that the inverter circuit 2 need only convert DC power into high frequency power, and may be a half-bridge inverter circuit or an inverter circuit having other configurations, for example.

The transformer 3 transforms the high frequency voltage that is output by the inverter circuit 2, and outputs the resultant voltage to the rectifying and smoothing circuit 5. The transformer 3 is provided with a primary winding 3a, a secondary winding 3b, and an auxiliary winding 3c. The input terminals of the primary winding 3a are respectively connected to the output terminals of the inverter circuit 2. The output terminals of the secondary winding 3b are respectively connected to the input terminals of the rectifying and smoothing circuit 5. Also, in the secondary winding 3b, a center tap is provided separately from the two output terminals. The center tap of the secondary winding 3b is connected to the output terminal b by a connection line 4. The output voltage of the inverter circuit 2 is transformed according to the turns ratio of the primary winding 3a and the secondary winding 3b, and input to the rectifying and smoothing circuit 5. The output terminals of the auxiliary winding 3c are respectively connected to the input terminals of the charging circuit 63. The output voltage of the inverter circuit 2 is transformed according to the turns ratio of the primary winding 3a and the auxiliary winding 3c, and input to the charging circuit 63. Because the secondary winding 3b and the auxiliary winding 3c are isolated from the primary winding 3a, the current that is input from the commercial power source D can be prevented from flowing to the circuitry on the secondary side and the charging circuit 63.

The rectifying and smoothing circuit 5 converts the high frequency power that is input from the transformer 3 into DC power, and outputs the DC power. The rectifying and smoothing circuit 5 is provided with a full-wave rectifying circuit that rectifies high frequency current, and a DC reactor that performs smoothing. Note that the configuration of the rectifying and smoothing circuit 5 is not limited.

The inverter circuit 7 is, for example, a single-phase half-bridge PWM control inverter, and is provided with two switching elements. The output terminal of the inverter circuit 7 is connected to the output terminal a. The inverter circuit 7, by switching the switching elements using a switching drive signal that is input from the control circuit 8, alternately switches the potential of the output terminal of the inverter circuit 7 (potential of the output terminal a) between the potential of the output terminal on the anode side and the potential of the output terminal on the cathode side of the rectifying and smoothing circuit 5. The inverter circuit 7 thereby alternately switches between the positive polarity which is a state where the potential of the output terminal a (connected to the workpiece W) is higher than the potential of the output terminal b (connected to the electrode of the welding torch B) and the opposite polarity which is a state where the potential of the output terminal a is lower than the potential of the output terminal b. In other words, the inverter circuit 7 converts the DC power that is input from the rectifying and smoothing circuit 5 into AC power, and outputs the AC power. Note that the inverter circuit 7 need only convert DC power into AC power, and may be an inverter circuit having other configurations.

The restriking circuit 6 is disposed between the rectifying and smoothing circuit 5 and the inverter circuit 7, and applies the restriking voltage between the output terminals a and b of the welding power source apparatus A1, when the output polarity of the welding power source apparatus A1 switches. Arc interruption tends to occur when switching from the positive polarity to the opposite polarity, and thus, in this embodiment, the restriking circuit 6 only applies the restriking voltage when switching from the positive polarity to the opposite polarity, and does not apply the restriking voltage when switching from the opposite polarity to the positive polarity. The restriking circuit 6 is provided with a diode 61, a restriking capacitor 62, the charging circuit 63, and the discharging circuit 64.

The diode 61 and the restriking capacitor 62 are connected in series, and connected in parallel with the input side of the inverter circuit 7. The diode 61 is connected at an anode terminal to the input terminal on the anode side of the inverter circuit 7, and is connected at a cathode terminal to one terminal of the restriking capacitor 62. The restriking capacitor 62 is connected at one terminal to the cathode terminal of the diode 61, and is connected at the other terminal to the input terminal on the cathode side of the inverter circuit 7. The restriking capacitor 62 is a capacitor having at least a predetermined capacitance, and is charged with the restriking voltage for applying to the output of the welding power source apparatus A1. The restriking capacitor 62 is charged by the charging circuit 63, and discharged by the discharging circuit 64. Also, the diode 61 allows the restriking capacitor 62 to absorb a surge voltage that occurs at the time of switching of the inverter circuit 7. In other words, the restriking capacitor 62 also functions as a snubber circuit for absorbing the surge voltage.

The charging circuit 63 is a circuit for charging the restriking voltage in the restriking capacitor 62, and is connected in parallel with the restriking capacitor 62. Fig. 2A is a diagram showing an example of the charging circuit 63. As shown in Fig. 2A, in the present embodiment, the charging circuit 63 is provided with a rectifying and smoothing circuit 63c and an isolated forward converter 63d. The rectifying and smoothing circuit 63c is provided with a rectifying circuit that performs full-wave rectification of AC voltage and a smoothing capacitor that performs smoothing, and converts the high frequency voltage that is input from the auxiliary winding 3c of the transformer 3 into a DC voltage. Note that the circuit configuration of the rectifying and smoothing circuit 63c is not limited. The isolated forward converter 63d steps up the DC voltage that is input from the rectifying and smoothing circuit 63c, and outputs the resultant DC voltage to the restriking capacitor 62. The isolated forward converter 63d is provided with a drive circuit 63a for driving a switching element 63b. The drive circuit 63a outputs a pulse signal that is for driving the switching element 63b, based on a charging circuit drive signal that is input from a charge control unit 86 described later. The drive circuit 63a outputs a predetermined pulse signal to the switching element 63b while the charging circuit drive signal is ON (e.g., high-level signal). The restriking capacitor 62 is thereby charged. On the other hand, the drive circuit 63a does not perform output of the pulse signal while the charging circuit drive signal is OFF (e.g., low-level signal). Therefore, charging of the restriking capacitor 62 is stopped. That is, the charging circuit 63 switches between a state of charging and a state of not charging the restriking capacitor 62, based on the charging circuit drive signal. Note that a configuration may be adopted in which the drive circuit 63a is not provided, and the charge control unit 86 inputs a pulse signal directly to the switching element 63b as the charging circuit drive signal. Also, the configuration of the charging circuit 63 is not limited. A configuration may be adopted in which the charging circuit 63 is provided with a step-up chopper circuit, a step-down chopper circuit or the like, instead of the isolated forward converter 63d. Also, the power that is supplied to the charging circuit 63 is not limited to power from the auxiliary winding 3c of the transformer 3. A configuration may be adopted in which the auxiliary winding 3c is not provided in the transformer 3, and power is supplied from the secondary winding 3b, or power is supplied from another power source.

The discharging circuit 64 is for discharging the restriking voltage charged in the restriking capacitor 62, and is connected between the connection point of the diode 61 and the restriking capacitor 62 and a connection line 4 that connects the center tap of the secondary winding 3b and the output terminal b. Fig. 2B is a diagram showing an example of the discharging circuit 64. As shown in Fig. 2B, the discharging circuit 64 is provided with a switching element 64a and a current limiting resistor 64b. In the present embodiment, the switching element 64a is an IGBT (Insulated Gate Bipolar Transistor). Note that the switching element 64a may be a bipolar transistor, a MOSFET (Metal-Oxide-Semiconductor Field-Effect Transistor) or the like. The switching element 64a and the current limiting resistor 64b are connected in series, and are connected in series to the restriking capacitor 62. A collector terminal of the switching element 64a is connected to one terminal of the current limiting resistor 64b, and an emitter terminal of the switching element 64a is connected to the connection line 4 by a connection line 64c. Note that a configuration may be adopted in which the current limiting resistor 64b is connected to the emitter terminal side of the switching element 64a. Also, a discharging circuit drive signal is input to a gate terminal of the switching element 64a from a discharge control unit 85 described later. The switching element 64a enters the ON state while the discharging circuit drive signal is ON (e.g., high-level signal). The restriking voltage charged in the restriking capacitor 62 is thereby discharged, via the current limiting resistor 64b. On the other hand, the switching element 64a enters the OFF state while the discharging circuit drive signal is OFF (e.g., low-level signal). Discharging of the restriking voltage is thereby stopped. That is, the discharging circuit 64 switches between a state of discharging and a state of not discharging the restriking capacitor 62, based on the discharging circuit drive signal. Note that the configuration of the discharging circuit 64 is not limited.

The current sensor 91 is for detecting the output current of the welding power source apparatus A1, and, in the present embodiment, is disposed on a connection line 71 that connects the output terminal of the inverter circuit 7 and the output terminal a. In the present embodiment, the case where current flows toward the output terminal a from the inverter circuit 7 is given as positive, and the case where current flows toward the inverter circuit 7 from the output terminal a is given as negative. The current sensor 91 detects an instantaneous value of the output current and inputs the detected value to the control circuit 8. Note that the configuration of the current sensor 91 is not limited, and need only detect the output current from the connection line 71. Note that the disposition location of the current sensor 91 is not limited. For example, the current sensor 91 may be disposed on the connection line 4.

The voltage sensor 92 is for detecting the voltage between the terminals of the restriking capacitor 62. The voltage sensor 92 detects the instantaneous value of the voltage between the terminals, and inputs the detected value to the control circuit 8.

The control circuit 8 is a circuit for controlling the welding power source apparatus A1, and is realized by a microcomputer or the like, for example. The instantaneous value of the output current is input to the control circuit 8 from the current sensor 91, and the instantaneous value of the voltage between the terminals of the restriking capacitor 62 is input to the control circuit 8 from the voltage sensor 92. The control circuit 8 then outputs a drive signal to each of the inverter circuit 2, the inverter circuit 7, the charging circuit 63 and the discharging circuit 64. The control circuit 8 is provided with a current control unit 81, a target current setting unit 82, a polarity switching control unit 83, the discharge control unit 85, and the charge control unit 86.

The current control unit 81 controls the inverter circuit 2, in order to perform feedback control of the output current of the welding power source apparatus A1. The current control unit 81 converts the instantaneous value signal of the output current that is input from the current sensor 91 into an absolute value signal using an absolute value circuit, generates the output control drive signal that is for controlling the switching elements of the inverter circuit 2 by PWM control, based on a deviation of the absolute value signal and the target current that is input from the target current setting unit 82, and outputs the generated output control drive signal to the inverter circuit 2.

The polarity switching control unit 83 controls the inverter circuit 7, in order to switch the output polarity of the welding power source apparatus A1. The polarity switching control unit 83 generates the switching drive signal which is a pulse signal that is for controlling the switching elements so as to switch the output polarity of the inverter circuit 7, and outputs the generated switching drive signal to the inverter circuit 7. The switching drive signal is also output to the discharge control unit 85.

The discharge control unit 85 controls the discharging circuit 64. The discharge control unit 85 generates the discharging circuit drive signal that is for controlling the discharging circuit 64, based on the switching drive signal that is input from the polarity switching control unit 83, and outputs the generated discharging circuit drive signal to the discharging circuit 64. The discharging circuit drive signal is also input to the charge control unit 86.

As shown in Fig. 3, the output current of the welding power source apparatus A1 (refer to (b) of Fig. 3) changes according to the switching drive signal (refer to (a) of Fig. 3). The switching drive signal shown in (a) of Fig. 3 sets the output terminal a (workpiece W) to a higher potential (positive polarity) than the output terminal b (welding torch B) when ON, and sets the output terminal a (workpiece W) to a lower potential (opposite polarity) than the output terminal b (welding torch B) when OFF. The output current of the welding power source apparatus A1 decreases from when the switching drive signal switches from ON to OFF (time t1 in Fig. 3), and attains a minimum current value after the polarity changes subsequent to crossing zero (time t2 in Fig. 3). Also, the output current of the welding power source apparatus A1 increases from when the switching drive signal switches from OFF to ON (time t4 in Fig. 3), and attains a maximum current value after the polarity changes (time t5 in Fig. 3) subsequent to crossing zero. The discharge control unit 85 generates the discharging circuit drive signal so as to be ON when the output current of the welding power source apparatus A1 changes from positive to negative. Specifically, the discharge control unit 85 generates a pulse signal that switches to ON when the switching drive signal switches from ON to OFF (time t1 in Fig. 3), and switches to OFF when a predetermined time period T₁ elapses (time t3 in Fig. 3), and outputs the generated pulse signal as the discharging circuit drive signal (refer to (c) of Fig. 3).

The predetermined time period T₁ is the time period for which the discharge state is continued, and is set to continue until the timing (time t2 in Fig. 3) at which the output current of the welding power source apparatus A1 changes from positive to negative due to restriking of the arc is completely exceeded. There are cases, when the predetermined time period T₁ is too short, where restriking is not possible because of not being able to discharge the restriking voltage at the time that the output current becomes zero. On the other hand, because the time period for charging the restriking voltage becomes shorter as the predetermined time period T₁ becomes longer, the predetermined time period T₁ is desirably as short as possible. The predetermined time period T₁ is desirably less than or equal to half of the period of opposite polarity. In the present embodiment, in the case where the output frequency of the inverter circuit 7 is 500 Hz and the ratio of the positive polarity and the opposite polarity is 7:3, the predetermined time period T₁ is set to be about 300 µm, such that the predetermined time period T₁ is half of the period of opposite polarity. Note that the predetermined time period T₁ is not limited, and need only be set based on testing or simulation.

Note that the method according to which the discharge control unit 85 generates the discharging circuit drive signal is not limited thereto. It need only be possible to apply the restriking voltage when the output current of the welding power source apparatus A1 changes from positive to negative, and thus the discharging circuit drive signal need only be ON before the output current changes from positive to negative, and need only be OFF after the output current has changed from positive to negative.

The charge control unit 86 controls the charging circuit 63. The charge control unit 86 generates the charging circuit drive signal that is for controlling the charging circuit 63, based on the discharging circuit drive signal that is input from the discharge control unit 85 and the instantaneous value of the voltage between the terminals of the restriking capacitor 62 that is input from the voltage sensor 92, and outputs the generated charging circuit drive signal to the charging circuit 63.

As shown in Fig. 3, the voltage between the terminals of the restriking capacitor 62 (refer to (e) of Fig. 3) drops rapidly (refer to (e) of Fig. 10) due to the flow of the restriking current when the discharging circuit drive signal (refer to (c) of Fig. 3) switches to ON (time t1 in Fig. 3) and the direction of the output current changes at time t2 (time t2 in Fig. 3). The restriking voltage needs to be charged in the restriking capacitor 62 by the time of the next discharge. Also, in the case where the restriking capacitor 62 has been charged to a target voltage V₀, further charging need not be performed. The charge control unit 86 generates the charging circuit drive signal so as to turn ON by the time that the restriking capacitor 62 attains the target voltage after discharge of the restriking capacitor 62. Specifically, the charge control unit 86 generates a pulse signal that switches to ON when the discharging circuit drive signal that is input from the discharge control unit 85 switches from ON to OFF, that is, when the predetermined time period T₁ elapses from the time at which the switching drive signal switches from ON to OFF (time t3 in Fig. 3), and switches to OFF when the voltage between the terminals of the restriking capacitor 62 attains the target voltage V₀ (time t6 in Fig. 3), and outputs the generated pulse signal as the charging circuit drive signal (refer to (d) of Fig. 3).

In the present embodiment, the charging speed of the charging circuit 63 is adjusted, such that the voltage between the terminals of the restriking capacitor 62 (refer to (e) of Fig. 3) will be less than or equal to a predetermined voltage V₁, when the switching drive signal (refer to (a) of Fig. 3) switches from OFF to ON (time t4 in Fig. 3), and also such that the voltage between the terminals attains the target voltage V₀ by the time of the next discharge. The predetermined voltage V₁ is the upper limit of the voltage at which the restriking capacitor 62, as a snubber circuit, is able to absorb the surge voltage that occurs when the inverter circuit 7 switches from the opposite polarity to the positive polarity, and a voltage smaller than the target voltage V₀ is set based on testing or simulation. In the present embodiment, the target voltage V₀ is given as 300 V, and the predetermined voltage V₁ is given as 200 V. Note that the target voltage V₀ and the predetermined voltage V₁ are not limited. The charging circuit drive signal switches to ON during the period of opposite polarity, and switches to OFF during the period of positive polarity.

Next, the operation and effect of the welding power source apparatus A1 according to the present embodiment will be described.

According to the present embodiment, the charge control unit 86 generates the charging circuit drive signal that switches to ON during the period of opposite polarity and switches to OFF during the positive polarity, and outputs the generated charging circuit drive signal to the charging circuit 63. The charging circuit 63 thereby starts charging of the restriking capacitor 62 during the period of opposite polarity, and ends charging of the restriking capacitor 62 during the positive polarity. Accordingly, charging of the restriking capacitor 62 is performed over a time span from the period of opposite polarity to the period of positive polarity. Because the time period that charging is performed can be lengthened in comparison to the case where charging is only performed in the period of positive polarity, instances where charging is not completed by the time of the next discharge can be suppressed, even in the case where the charging speed of the restriking voltage slows. Also, because the time period that charging is performed can be lengthened, the charging speed can be slowed by lowering the voltage that is supplied to the charging circuit 63. In this case, the elements that are used in the charging circuit 63 can be set to a low withstand voltage, enabling cost reduction.

Also, according to the present embodiment, the charging circuit drive signal that is generated by the charge control unit 86 switches to ON when the discharging circuit drive signal switches from ON to OFF, that is, when the predetermined time period T₁ elapses from the time at which the switching drive signal switches from ON to OFF. The charging circuit 63 thereby starts charging of the restriking capacitor 62, when the predetermined time period T₁ elapses from the time at which the inverter circuit 7 switches from the positive polarity to the opposite polarity. Accordingly, the charging circuit 63 is able to start charging of the restriking capacitor 62 at a timing that is after restriking of the arc is completed and during the period of opposite polarity.

Also, according to the present embodiment, the voltage between the terminals of the restriking capacitor 62 will be less than or equal to the predetermined voltage V₁, when the inverter circuit 7 switches from the opposite polarity to the positive polarity. Accordingly, the restriking capacitor 62, as a snubber circuit, is able to absorb the surge voltage that occurs when switching from the opposite polarity to the positive polarity. Application of a high voltage to the switching elements of the inverter circuit 7 can thereby be suppressed.

Note that, in the present embodiment, the case where the charge control unit 86 switches the charging circuit drive signal to ON when the discharging circuit drive signal switches to OFF was described, but the present disclosure is not limited thereto. The timing at which the charging circuit drive signal is switched to ON need only be during the period of negative polarity. In order to further lengthen the charging time period, however, the timing at which the charging circuit drive signal switched to ON is desirably as early as possible.

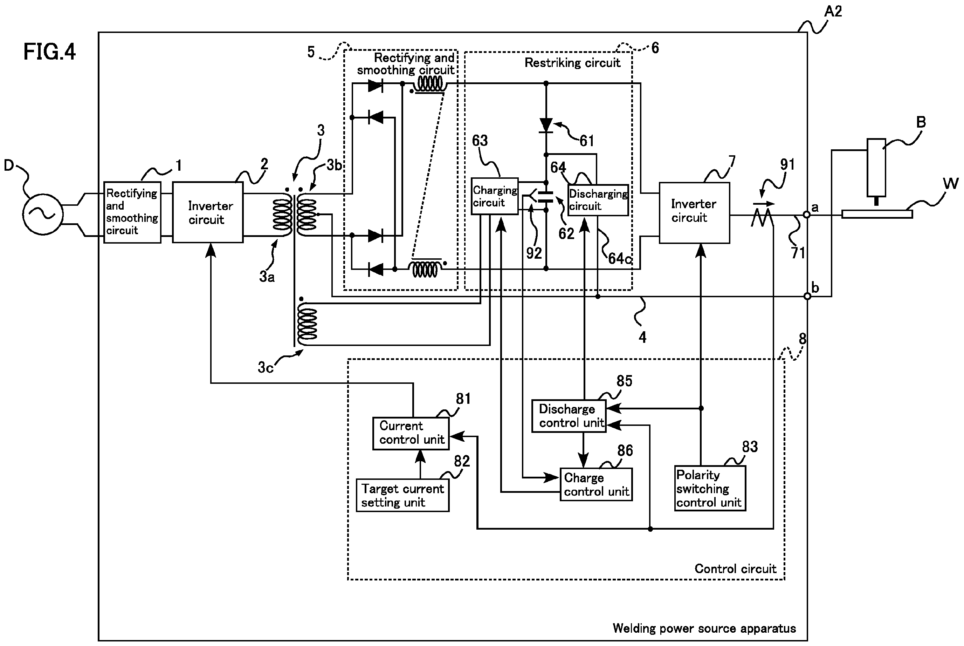

Figs. 4 to 8 show other embodiments. Note that, in these diagrams, the same reference signs as the above embodiment are given to elements that are the same as or similar to the above embodiment.

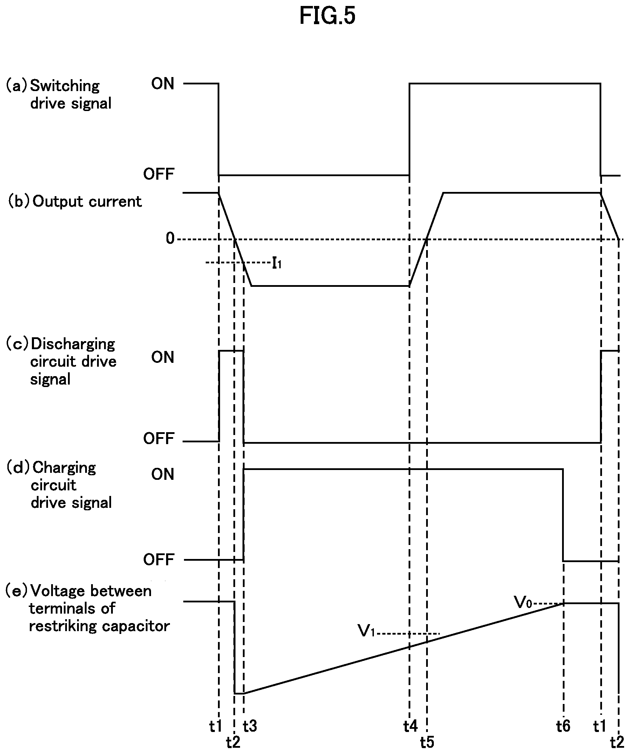

Figs. 4 and 5 are for describing a welding power source apparatus A2 according to a second embodiment. Fig. 4 is a block diagram showing the welding power source apparatus A2, and shows the overall configuration of a welding system. Fig. 5 is a timing chart for describing control of the restriking circuit 6, and shows waveforms of various signals of the welding power source apparatus A2. The welding power source apparatus A2 differs from the welding power source apparatus A1 according to the first embodiment (refer to Figs. 1 and 2) in that the discharge control unit 85 generates the discharging circuit drive signal based on the output current of the welding power source apparatus A2.

As shown in Fig. 4, the instantaneous value of the output current detected by the current sensor 91 is input to the discharge control unit 85 according to the second embodiment. The discharge control unit 85 then generates the discharging circuit drive signal based on the switching drive signal that is input from the polarity switching control unit 83 and the instantaneous value of the output current that is input from the current sensor 91. The discharge control unit 85 according to the second embodiment, rather than switching the discharging circuit drive signal to OFF based on the predetermined time period T₁ as in the first embodiment, uses the instantaneous value of the output current to judge that restriking of the arc is completed, and switches the discharging circuit drive signal to OFF.

As shown in Fig. 5, the discharge control unit 85 generates a pulse signal that switches to ON when the switching drive signal switches from ON to OFF (time t1 in Fig. 5), and switches to OFF when the instantaneous value of the output current becomes less than or equal to a predetermined current I₁ (time t3 in Fig. 5), and outputs the generated pulse signal as the discharging circuit drive signal (refer to (c) of Fig. 3).

The predetermined current I₁ is a current value between the minimum current value and zero, and is for judging that restriking of the arc is completed. The predetermined current I₁ is set to a current value at which it can be reliably judged that the direction of the output current has changed, even if the detected instantaneous value of the output current contains detection error. When the predetermined current I₁ is too large (when too close to zero), there are cases where restriking cannot be performed due to the discharge stopping before restriking is completed. On the other hand, because the time period for charging the restriking voltage becomes shorter as the predetermined current I₁ becomes smaller (shifts further from zero), the predetermined current I₁ is desirably as large as possible. The predetermined current I₁ is desirably set to greater than or equal to half of the minimum current value. In the present embodiment, the predetermined current I₁ is set to about -2 A, such that the predetermined current I₁ will be greater than or equal to half of the minimum current value, even in the case where the target current of the inverter circuit 7 is 5 A (minimum current value is -5 A). Note that the predetermined current I₁ is not limited, and need only be set based on testing or simulation.

Also, as shown in Fig. 5, the charge control unit 86 generates a pulse signal that switches to ON when the discharging circuit drive signal that is input from the discharge control unit 85 switches from ON to OFF, that is, when the output current becomes less than or equal to the predetermined current I₁ after the switching drive signal switches from ON to OFF (time t3 in Fig. 5), and switches to OFF when the voltage between the terminals of the restriking capacitor 62 attains the target voltage V₀ (time t6 in Fig. 5), and outputs the generated pulse signal as the charging circuit drive signal (refer to Fig. 5 (d)).

According to the present embodiment, the charge control unit 86 generates the charging circuit drive signal that switches to ON during the period of opposite polarity and switches to OFF during the period of positive polarity, and outputs the generated charging circuit drive signal to the charging circuit 63. The charging circuit 63 thereby starts charging of the restriking capacitor 62 during the period of opposite polarity, and ends charging of the restriking capacitor 62 during the period of positive polarity. Because charging of the restriking capacitor 62 is performed over a time span from the period of opposite polarity to the period of positive polarity, similar effects to the first embodiment can also be achieved in the present embodiment.

Also, according to the present embodiment, the charging circuit drive signal that is generated by the charge control unit 86 switches to ON when the discharging circuit drive signal switches from ON to OFF, that is, when the output current becomes less than or equal to the predetermined current I₁ after the switching drive signal switches from ON to OFF. The charging circuit 63 thereby starts charging of the restriking capacitor 62, when the output current becomes less than or equal to the predetermined current I₁ after switching from the positive polarity to the opposite polarity. Accordingly, the charging circuit 63 is able to start charging of the restriking capacitor 62 at a timing that is after restriking of the arc is completed and during the period of opposite polarity. Also, according to the present embodiment, the discharging circuit drive signal is switched to OFF after it is judged, using the instantaneous value of the output current, that restriking of the arc is completed, and thus the discharging circuit drive signal can often be switched to OFF at an earlier timing in comparison to the case where the discharging circuit drive signal is switched to OFF based on the predetermined time period T₁ as in the first embodiment. Accordingly, the time period that charging is performed can be further lengthened.

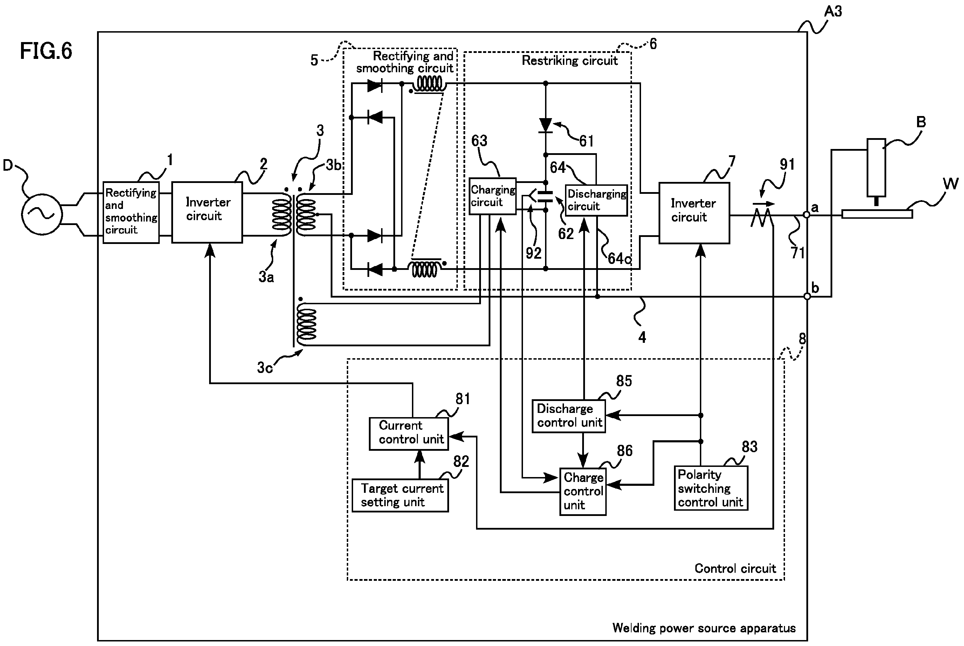

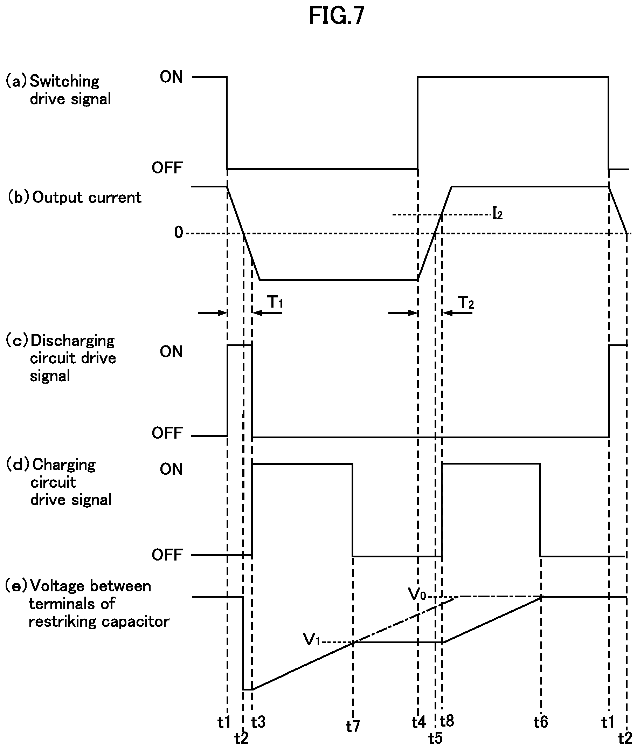

Figs. 6 and 7 are for describing a welding power source apparatus A3 according to a third embodiment. Fig. 6 is a block diagram showing the welding power source apparatus A3, and shows the overall configuration of a welding system. Fig. 7 is a timing chart for describing control of the restriking circuit 6, and shows waveforms of various signals of the welding power source apparatus A3. The welding power source apparatus A3 differs from the welding power source apparatus A1 according to the first embodiment (refer to Figs. 1 and 2) in that the charge control unit 86 interrupts charging partway through the charging and then resumes the charging.

The charging circuit 63 according to the third embodiment is set to a faster charging speed than the charging circuit 63 according to the first embodiment. Accordingly, the voltage between the terminals of the restriking capacitor 62 (refer to (e) of Fig. 7) reaches the predetermined voltage V₁ by the time that the switching drive signal (refer to (a) of Fig. 7) switches from OFF to ON (time t4 in Fig. 7). When charging is continued in this state (in (e) of Fig. 7, the waveform in this case is shown with a dashed-dotted line), the voltage between the terminals becomes too high at time t4, and the restriking capacitor 62, as a snubber circuit, is unable to absorb the surge voltage that occurs when the inverter circuit 7 switches from the opposite polarity to the positive polarity. Accordingly, the charge control unit 86 according to the third embodiment interrupts and then resumes charging, by temporarily switching the charging circuit drive signal to OFF and then back to ON.

As shown in Fig. 6, the switching drive signal generated by the polarity switching control unit 83 is input to the charge control unit 86 according to the third embodiment. The charge control unit 86 then generates the charging circuit drive signal based on the discharging circuit drive signal that is input from the discharge control unit 85, the instantaneous value of the voltage between the terminals of the restriking capacitor 62 that is input from the voltage sensor 92, and the switching drive signal that is input from the polarity switching control unit 83. The charge control unit 86 according to the third embodiment temporarily switches the charging circuit drive signal to OFF when the voltage between the terminals of the restriking capacitor 62 attains the predetermined voltage V₁, and returns the charging circuit drive signal to ON after the inverter circuit 7 switches from the opposite polarity to the positive polarity and restriking of the arc is completed.

As shown in Fig. 7, the charge control unit 86 generates a pulse signal that switches to ON when the discharging circuit drive signal that is input from the discharge control unit 85 switches from ON to OFF (time t3 in Fig. 7), and switches to OFF when the voltage between the terminals of the restriking capacitor 62 attains the target voltage V₀ (time t6 in Fig. 7), and outputs the generated pulse signal as the charging circuit drive signal. Also, the charge control unit 86 temporarily switches the charging circuit drive signal to OFF, when the voltage between the terminals of the restriking capacitor 62 attains the predetermined voltage V₁ while the charging circuit drive signal is ON (time t7 in Fig. 7), and returns the charging circuit drive signal to ON (refer to (d) of Fig. 7) when a predetermined time period T₂ elapses (time t8 in Fig. 7) from the time at which the switching drive signal switches from OFF to ON (time t4 in Fig. 7). The predetermined time period T₂ may be the same as or may be different from the predetermined time period T₁. Because the charging circuit 63 interrupts charging at time t7 and resumes charging at time t8, the voltage between the terminals of the restriking capacitor 62 is fixed at the predetermined voltage V₁ from time t7 until time t8 (refer to (e) of Fig. 7).

According to the present embodiment, although there are cases where charging is interrupted partway through, the charging circuit 63 starts charging of the restriking capacitor 62 during the period of opposite polarity and ends charging of the restriking capacitor 62 during the period of positive polarity. Because charging of the restriking capacitor 62 is performed over a time span from the period of opposite polarity to the period of positive polarity, similar effects to the first embodiment can also be achieved in the present embodiment.

Also, according to the present embodiment, the charge control unit 86 interrupts charging, when the voltage between the terminals of the restriking capacitor 62 attains the predetermined voltage V₁ before the inverter circuit 7 switches from the opposite polarity to the positive polarity. Accordingly, the voltage between the terminals of the restriking capacitor 62 is the predetermined voltage V₁, when the inverter circuit 7 switches from the opposite polarity to the positive polarity. Accordingly, the restriking capacitor 62, as a snubber circuit, is able to absorb the surge voltage that occurs when switching from the opposite polarity to the positive polarity. Application of a high voltage to the switching elements of the inverter circuit 7 can thereby be suppressed.

In the present embodiment, the case where the charge control unit 86 returns the charging circuit drive signal to ON when the predetermined time period T₂ elapses from the time at which the switching drive signal switches from OFF to ON was described, but the present disclosure is not limited thereto. The charge control unit 86 may return the charging circuit drive signal to ON after judging, using the instantaneous value of the output current, that restriking of the arc is completed. Specifically, the instantaneous value of the output current detected by the current sensor 91 is input to the charge control unit 86, instead of the switching drive signal from the polarity switching control unit 83 being input thereto. The charge control unit 86 then returns the charging circuit drive signal to ON, when the instantaneous value of the output current becomes greater than or equal to a predetermined current I₂ after the switching drive signal switches from OFF to ON (refer to time t4 in (a) of Fig. 7). The predetermined current I₂ may have an absolute value that is the same as or different from the predetermined current I₁. Even in this case, the charge control unit 86 is able to resume charging, after the inverter circuit 7 switches from the opposite polarity to the positive polarity and restriking of the arc is completed.

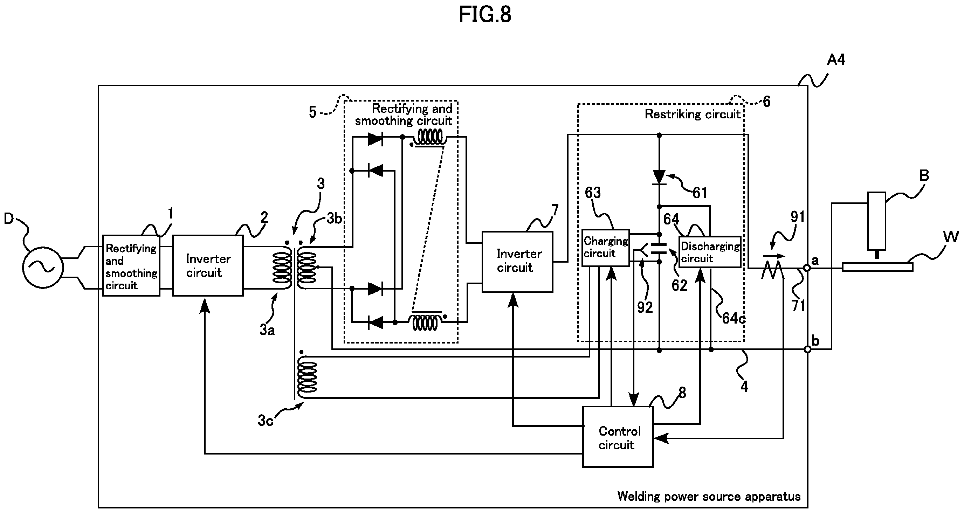

Fig. 8 is a block diagram showing a welding power source apparatus A4 according to a fourth embodiment, and shows the overall configuration of a welding system. Note that, in Fig. 8, illustration of the internal configuration of the control circuit 8 is omitted. The welding power source apparatus A4 shown in Fig. 8 differs from the welding power source apparatus A1 according to the first embodiment (refer to Fig. 1) in that the restriking circuit 6 is disposed on the output side of the inverter circuit 7. Note that, in the present embodiment, the restriking capacitor 62 does not function as a snubber circuit of the inverter circuit 7, and thus a configuration may be adopted in which wiring on the cathode side of the diode 61 and the restriking capacitor 62 (wiring connected to the connection line 4) is not provided.

Similar effects to the first embodiment can be also be achieved in the fourth embodiment.

Note that, in the above first to fourth embodiments, cases where the welding power source apparatuses A1 to A4 were used in a TIG welding system were described, but the present disclosure is not limited thereto. The welding power source apparatus according to the present disclosure can also be used in other semi-automated welding systems. The welding power source apparatus according to the present disclosure can also be used in fully automated robotic welding systems, and can also be used in shielded metal arc welding systems. The present disclosure can be applied not only to AC output-only welding power source apparatuses but also to welding power source apparatuses that use both AC and DC output.

The welding power source apparatus of the present disclosure is not limited to the foregoing embodiments. Various design changes can be made to the specific configurations of the constituent elements of the welding power source apparatus according to the present disclosure, without departing from the scope of the appended claims.

## Claims

1. A welding power source (A1) apparatus that applies an AC voltage between a welding torch (B) and a workpiece (W), the apparatus comprising:
an inverter circuit (7) configured to switch between a positive polarity at which the workpiece (W) has a higher potential than the welding torch (B) and an opposite polarity at which the workpiece (W) has a lower potential than the welding torch (B);
a restriking circuit (6) configured to apply a restriking voltage to an output of the inverter circuit (7), when the positive polarity is switched to the opposite polarity; and
a control circuit (8) configured to control the restriking circuit (6),
wherein the restriking circuit (6) includes:
a restriking capacitor (62) configured to be charged with the restriking voltage;
a charging circuit (63) configured to charge the restriking capacitor (62) with the restriking voltage; and
a discharging circuit (64) configured to discharge the restriking voltage charged in the restriking capacitor (62), and
**characterized in that**:
the control circuit (8) causes the charging circuit (63) to start charging at a time of the opposite polarity when a predetermined time period elapses after the positive polarity is switched to the opposite polarity, and to end charging after the opposite polarity is switched to the positive polarity.

2. The welding power source (A1) apparatus according to claim 1, wherein the predetermined time period is a time period less than or equal to half of a period of the opposite polarity.

3. The welding power source (A1) apparatus according to claim 1, further comprising a current sensor (91) configured to detect an output current that flows from the inverter circuit (7) to the workpiece (W), taking a flow direction from the inverter circuit (7) to the workpiece (W) as a positive flow direction,
wherein the control circuit (8) causes the charging circuit (63) to start charging when the output current becomes less than or equal to a negative predetermined current.

4. The welding power source (A1) apparatus according to any of claims 1 to 3, further comprising a voltage sensor (92) configured to detect a voltage between terminals of the restriking capacitor (62),
wherein the control circuit (8) causes the charging circuit (63) to interrupt charging when the voltage between the terminals detected by the voltage sensor (92) attains a predetermined voltage after the charging circuit (63) to start the charging, and further causes the charging circuit (63) to resume charging after the opposite polarity is switched to the positive polarity.

5. The welding power source (A1) apparatus according to claim 4, wherein the control circuit (8) causes the charging circuit (63) to resume charging when a predetermined time period elapses after the opposite polarity is switched to the positive polarity.

6. The welding power source (A1) apparatus according to claim 4, wherein the control circuit (8) causes the charging circuit (63) to resume charging when the output current becomes greater than or equal to a positive predetermined current.

7. The welding power source (A1) apparatus according to any of claims 1 to 6, wherein the welding torch (B) is provided with a non-consumable electrode, and the inverter circuit (7) comprises a half-bridge circuit.

## Patentansprüche

1. Schweißstromquellenvorrichtung (A1), die eine Wechselspannung zwischen einem Schweißbrenner (B) und einem Werkstück (W) anlegt, wobei die Vorrichtung umfasst:
eine Inverterschaltung (7), die so konfiguriert ist, dass sie zwischen einer positiven Polarität, bei der das Werkstück (W) ein höheres Potential als der Schweißbrenner (B) hat, und einer entgegengesetzten Polarität, bei der das Werkstück (W) ein niedrigeres Potential als der Schweißbrenner (B) hat, umschaltet;
eine Wiederzündschaltung (6), die so konfiguriert ist, dass sie eine Wiederzündspannung an einen Ausgang der Inverterschaltung (7) anlegt, wenn die positive Polarität auf die entgegengesetzte Polarität geschaltet wird; und
eine Steuerschaltung (8), die so konfiguriert ist, dass sie die Wiederzündschaltung (6) steuert,
wobei die Wiederzündschaltung (6) enthält:
einen Wiederzündkondensator (62), der so konfiguriert ist, dass er mit der Wiederzündspannung geladen wird;
eine Ladeschaltung (63), die so konfiguriert ist, dass sie den Wiederzündkondensator (62) mit der Wiederzündspannung auflädt; und
eine Entladeschaltung (64), die so konfiguriert ist, dass sie die in dem Wiederzündkondensator (62) geladene Wiederzündspannung entlädt, und **dadurch gekennzeichnet**:
die Steuerschaltung (8) bewirkt, dass die Ladeschaltung (63) mit dem Laden zu einem Zeitpunkt der entgegengesetzten Polarität beginnt, wenn eine vorbestimmte Zeitspanne verstrichen ist, nachdem die positive Polarität auf die entgegengesetzte Polarität umgeschaltet wurde, und das Laden beendet, nachdem die entgegengesetzte Polarität auf die positive Polarität umgeschaltet wurde.

2. Schweißstromquellenvorrichtung (A1) nach Anspruch 1, wobei die vorbestimmte Zeitspanne eine Zeitspanne ist, die kleiner oder gleich der Hälfte einer Periode der entgegengesetzten Polarität ist.

3. Schweißstromquellenvorrichtung (A1) nach Anspruch 1, die ferner einen Stromsensor (91) umfasst, der so konfiguriert ist, dass er einen Ausgangsstrom erfasst, der von der Inverterschaltung (7) zum Werkstück (W) fließt, wobei er eine Flussrichtung von der Inverterschaltung (7) zum Werkstück (W) als positive Flussrichtung annimmt,
wobei die Steuerschaltung (8) bewirkt, dass die Ladeschaltung (63) mit dem Laden beginnt, wenn der Ausgangsstrom kleiner oder gleich einem negativen vorbestimmten Strom wird.

4. Schweißstromquellenvorrichtung (A1) nach einem der Ansprüche 1 bis 3, die ferner einen Spannungssensor (92) umfasst, der so konfiguriert ist, dass er eine Spannung zwischen den Anschlüssen des Wiederzündkondensators (62) erfasst,
wobei die Steuerschaltung (8) bewirkt, dass die Ladeschaltung (63) das Laden unterbricht, wenn die Spannung zwischen den Anschlüssen, die durch den Spannungssensor (92) erfasst wird, eine vorbestimmte Spannung erreicht, nachdem die Ladeschaltung (63) das Laden gestartet hat, und ferner bewirkt, dass die Ladeschaltung (63) das Laden wieder aufnimmt, nachdem die entgegengesetzte Polarität auf die positive Polarität umgeschaltet wurde.

5. Schweißstromquellenvorrichtung (A1) nach Anspruch 4, wobei die Steuerschaltung (8) bewirkt, dass die Ladeschaltung (63) das Laden wieder aufnimmt, wenn eine vorbestimmte Zeitspanne verstrichen ist, nachdem die entgegengesetzte Polarität auf die positive Polarität umgeschaltet wurde.

6. Schweißstromquellenvorrichtung (A1) nach Anspruch 4, wobei die Steuerschaltung (8) bewirkt, dass die Ladeschaltung (63) das Laden wieder aufnimmt, wenn der Ausgangsstrom größer oder gleich einem positiven vorbestimmten Strom wird.

7. Schweißstromquellenvorrichtung (A1) nach einem der Ansprüche 1 bis 6, wobei der Schweißbrenner (B) mit einer nicht verbrauchbaren Elektrode versehen ist und die Inverterschaltung (7) eine Halbbrückenschaltung aufweist.

## Revendications

1. Appareil de source d'alimentation pour soudage (A1) qui applique une tension continue entre un chalumeau de soudage (B) et une pièce (W), l'appareil comprenant :
un circuit onduleur (7) configuré pour alterner entre une polarité positive à laquelle la pièce (W) présente un potentiel plus élevé que le chalumeau de soudage (B) et une polarité opposée à laquelle la pièce (W) présente un potentiel plus faible que le chalumeau de soudage (B);
un circuit de rétablissement (6) configuré pour appliquer une tension de rétablissement à une sortie du circuit onduleur (7), lorsque la polarité positive est commutée sur la polarité opposée ; et
un circuit de commande (8) configuré pour commander le circuit de rétablissement (6), dans lequel le circuit de rétablissement (6) inclut :
un condensateur de rétablissement (62) configuré pour être chargé avec la tension de rétablissement ;
un circuit de charge (63) configuré pour charger le condensateur de rétablissement (62) avec la tension de rétablissement ; et
un circuit de décharge (64) configuré pour décharger la tension de rétablissement chargée dans le condensateur de rétablissement (62), et
**caractérisé en ce que** :
le circuit de commande (8) amène le circuit de charge (63) à démarrer la charge à un moment de la polarité opposée lorsqu'une période de temps prédéterminée s'est écoulée après que la polarité positive a commuté sur la polarité opposée, et pour mettre fin à la charge après que la polarité opposée a commuté sur la polarité positive.

2. Appareil de source d'alimentation pour soudage (A1) selon la revendication 1, dans lequel la période de temps prédéterminée est une période de temps inférieure ou égale à la moitié d'une période de la polarité opposée.

3. Appareil de source d'alimentation pour soudage (A1) selon la revendication 1, comprenant en outre un capteur de courant (91) configuré pour détecter un courant de sortie qui s'écoule depuis le circuit onduleur (7) jusqu'à la pièce (W), prenant une direction d'écoulement du circuit onduleur (7) à la pièce (W) comme direction d'écoulement positive,
dans lequel le circuit de commande (8) amène le circuit de charge (63) à démarrer la charge lorsque le courant de sortie devient inférieur ou égal à un courant prédéterminé négatif.

4. Appareil de source d'alimentation pour soudage (A1) selon l'une quelconque des revendications 1 à 3, comprenant en outre un capteur de tension (92) configuré pour détecter une tension entre des bornes du condensateur de rétablissement (62),
dans lequel le circuit de commande (8) amène le circuit de charge (63) à interrompre la charge lorsque la tension entre les bornes détectée par le capteur de tension (92) atteint une tension prédéterminée après que le circuit de charge (63) pour démarrer la charge, et amène en outre le circuit de charge (63) à reprendre la charge après que la polarité opposée a commuté sur la polarité positive.

5. Appareil de source d'alimentation pour soudage (A1) selon la revendication 4, dans lequel le circuit de commande (8) amène le circuit de charge (63) à reprendre la charge lorsqu'une période de temps prédéterminée s'est écoulée après que la polarité opposée a commuté sur la polarité positive.

6. Appareil de source d'alimentation pour soudage (A1) selon la revendication 4, dans lequel le circuit de commande (8) amène le circuit de charge (63) à reprendre la charge lorsque le courant de sortie devient supérieur ou égal à un courant prédéterminé positif.

7. Appareil de source d'alimentation pour soudage (A1) selon l'une quelconque des revendications 1 à 6, dans lequel le chalumeau de soudage (B) est pourvu d'une électrode non consommable, et le circuit onduleur (7) comprend un circuit en demi-pont.
